# EUROPEAN PATENT APPLICATION

(11) **EP 4 506 604 A1**
(43) Date of publication of application: **12.02.2025**
(21) Application number: 22936304.9
(22) Date of filing: 02.08.2022
(51) Int. Cl.: F16L 29/04

(54) **FLUID CONNECTOR AND SOCKET HOUSING ASSEMBLY**

(30) Priority: 07.04.2022 CN 202210360424
(71) Applicant: BEISIT ELECTRIC TECH (HANGZHOU) CO., LTD., Hangzhou, Zhejiang 311100 (CN)
(72) Inventor: LI, Xiaoqiang, Hangzhou, Zhejiang 311100 (CN); ZHOU, Min, Hangzhou, Zhejiang 311100 (CN); ZENG, Fanle, Hangzhou, Zhejiang 311100 (CN); ZENG, Hao, Hangzhou, Zhejiang 311100 (CN); LI, Changzheng, Hangzhou, Zhejiang 311100 (CN); HE, Mingshan, Hangzhou, Zhejiang 311100 (CN)
(74) Representative: Prinz & Partner mbB
(86) International application number: PCT/CN2022/109570
(87) International publication number: WO 2023/193374

(57) **Abstract**

A socket housing assembly, comprising a first socket housing (205), a first end of the first socket housing being provided with a threaded connection section, and the first socket housing being provided with a notch portion which penetrates through from the threaded connection section and extends in an axial direction; a control block (203), which is used for be loaded into the first socket housing from the first end of the first socket housing along the notch portion, the control block comprising an elastic pressing portion (2031) and an annular limiting portion (2032); a control block spring (204), provided in the first socket housing and abutting against the inner wall of the first socket housing and the end of the control block away from the notch portion; and a socket housing cover (201), having a first end used for a plug assembly to be inserted and having a second end having an inner wall provided with an internal thread matching the threaded connection section. According to the socket housing assembly, the mounting convenience of the control block and the control block spring is improved, a product assembly difficulty is reduced, later repair and maintenance are facilitated, the inclination of the spring is effectively avoided, and the sealing performance of a product is guaranteed. A fluid connector comprises the socket housing assembly.

## Description

This application claims the priority of the Chinese Patent Application No. 202210360424.3, titled "FLUID CONNECTOR AND SOCKET HOUSING ASSEMBLY", filed on April 7, 2022 with the China National Intellectual Property Administration, which is incorporated herein by reference in its entirety.

### FIELD

The present application relates to the technical field of connectors, and in particular to a fluid connector and a socket housing assembly.

### BACKGROUND

Common cooling methods for an electronic device include air cooling and liquid cooling. With a development trend of integration and miniaturization of the electronic device, cooling for electronic components directly affects the performance and service life of the electronic device. The liquid cooling has advantages of high heat dissipation efficiency, low noise and small occupied space, thus the liquid cooling is widely used instead of the air cooling in a cooling system of the electronic device. As an important component to connect a liquid-cooling fluid pipeline and control on-off of the pipeline, the sealing performance and stability of a fluid connector are extremely important.

The fluid connector in the conventional technology generally adopts a cooperation of a plug assembly and a socket assembly, and the plug assembly is inserted into the socket assembly to realize conduction. Locking and unlocking of the plug assembly being inserted into the socket assembly are realized by a control block and a control block spring, and the control block and the control block spring are embedded in a socket housing. During a product assembly process, it is not easy to mount the control block and the control block spring, and the spring is apt to tilt during the mounting process, which affects the normal use of the product.

### SUMMARY

An object of the present application is to provide a socket housing assembly, which facilitates mounting a control block and a control block spring, reduces a difficulty for assembling the product, and ensures a sealing performance of the product. Another object of the present application is to provide a fluid connector having the socket housing assembly as described above.

In order to achieve the above object, a socket housing assembly is provided according to the present application, including:
a first socket housing, in which a first end of the first socket housing is provided with a threaded connection section, and the first socket housing is provided with a notch portion which runs through the threaded connection section and extends in an axial direction;
a control block configured for being mounted into the first socket housing from a first end of the first socket housing along the notch portion, in which the control block includes an elastic pressing portion and an annular limiting portion, the elastic pressing portion covers an outside of the notch portion and seals the notch portion, and the annular limiting portion is arranged in the first socket housing and connected with the elastic pressing portion;
a control block spring arranged in the first socket housing and abutting against an inner wall of the first socket housing and an end, away from the notch portion, of the control block;
a socket housing cover having a first end and a second end, in which the first end is used for a plug assembly to be inserted into, and the second end has an inner wall provided with an internal thread matching the threaded connection section.

In some embodiments, the socket housing assembly further includes a second socket housing, and a first end of the second socket housing is connected with a second end of the first socket housing, and a second end of the second socket housing is configured for connecting the socket base housing.

In some embodiments, a width of the control block is smaller than an axial length of the notch portion, and the socket housing assembly further includes a limiting gasket, which is arranged between the first socket housing and the socket housing cover and is configured for abutting against the control block in the axial direction.

In some embodiments, the annular limiting portion is a sheet metal member or a stamped member, and the elastic pressing portion is connected with the annular limiting portion by injection molding/compression molding.

In some embodiments, an inner wall of the first socket housing opposite to the notch portion is provided with a positioning groove for positioning the control block spring, and/or a side, abutting against the control block spring, of the annular limiting portion is provided with a positioning protrusion for positioning the control block spring.

In some embodiments, the socket housing assembly further includes multiple groups of limiting posts arranged in the first socket housing and configured for limiting the annular limiting portion.

In some embodiments, the multiple groups of limiting posts include a pair of first limiting posts respectively arranged on both sides of an outer periphery of the annular limiting portion, a pair of second limiting posts respectively arranged on both sides of a bottom of an inner periphery of the annular limiting portion and a pair of third limiting posts respectively arranged on both sides of a top of the inner periphery of the annular limiting portion;
when the control block is pressed, the third limiting posts define a lower limit position of the control block; and when the control block is released, the second limit posts define a upper limit position of the control block.

A fluid connector is further provided according to the present application, including a plug assembly and a socket assembly, and the plug assembly includes a plug base housing, a plug housing, a plug spring and a plug sealing rod, which is crimped between the plug base housing and the plug housing through the plug spring;
the socket assembly includes a socket base housing, a socket spring, a sealing block and the socket housing assembly as described in any one of the above embodiments, and the sealing block is crimped between the socket base housing and the socket housing assembly through the socket spring;
the plug housing is provided with a hollow guide post for inserting into the first socket housing, and an outer periphery of the hollow guide post is provided with an annular locking groove which is locked with the annular limiting portion; when the hollow guide post is inserted into the first socket housing, the plug sealing rod and the sealing block retreat away from each other, and the plug assembly is in communication with the socket assembly.

In some embodiments, the plug base housing is connected with the plug housing by threads, a first sealing ring is arranged between the plug base housing and the plug housing, and a second sealing ring is arranged between the plug sealing rod and the plug housing.

When the socket housing assembly is provided with a second socket housing, two ends of the second socket housing are respectively connected with the first socket housing and the socket base housing by threads, and a third sealing ring is arranged between the inner periphery of the first end of the second socket housing and the outer periphery of the second end of the hollow guide post; a fourth sealing ring is arranged between the second socket housing and the sealing block, and a fifth sealing ring is arranged between the second socket housing and the socket base housing.

The socket housing assembly provided according to the present application is arranged in a structure in which the first socket housing is in a threaded connection with the socket housing cover. When the control block and the control block spring need to be mounted, only the socket housing cover needs to be unscrewed, the control block spring is mounted in place, and then the control block is loaded into from the notch portion of the threaded connection section, so that the elastic pressing portion of the control block is pressed on the outside of the notch portion, and the annular limiting portion is placed in the first socket housing, which significantly reduces the difficulty of mounting the control block and the control block spring, and is convenient for later maintenance. Also, the control block spring can be effectively prevented from tilting, and the sealing performance between the control block and the notch portion is improved.

### BRIEF DESCRIPTION OF THE DRAWINGS

To describe the technical solutions in the embodiments of the present application or in the conventional technology more clearly, the accompanying drawings required for describing the embodiments or the conventional technology are briefly introduced hereinafter. Apparently, the accompanying drawings in the following description show merely the embodiments of the present application, and a person of ordinary skill in the art can derive other drawings from these accompanying drawings without creative efforts.
FIG. 1 is a schematic view showing a whole structure of a fluid connector according to an embodiment of the present application;
FIG. 2 is a longitudinal sectional view of FIG. 1;
FIG. 3 is an exploded view of FIG. 1;
FIG. 4 is a structural view of a socket housing assembly according to an embodiment of the present application;
FIG. 5 is a longitudinal sectional view of FIG. 4;
FIG. 6 is an exploded view of FIG. 4;
FIG. 7 is a cross-sectional view of FIG. 4 taken along line A-A;
FIG. 8 is an exploded view of a socket housing assembly according to another embodiment of the present application;
FIG. 9 is a structural view of a plug assembly of FIG. 1;
FIG. 10 is a longitudinal sectional view of FIG. 9;
FIG. 11 is a structural view of a socket assembly of FIG. 1;
FIG. 12 is a longitudinal sectional view of FIG. 11.

Reference numerals in the drawings are listed as follows:
100 plug assembly, 200 socket assembly;
101 plug base housing, 102 plug spring, 103 first sealing ring, 104 plug sealing rod, 105 second sealing ring, 106 plug housing;
201 socket housing cover, 202 limiting gasket, 203 control block, 204 control block spring, 205 first socket housing, 206 third sealing ring, 207 second socket housing, 208 fourth sealing ring, 209 sealing block, 210 socket spring, 211 fifth sealing ring, 212 socket base housing;
2031 elastic pressing portion, 2032 annular limiting portion;
2051 first limiting post, 2052 second limiting post, 2053 third limiting post.

### DETAILED DESCRIPTION OF THE EMBODIMENTS

Technical solutions in the embodiments of the present application are clearly and completely described below in conjunction with the drawings of the embodiments of the present application. Certainly, the embodiments described in the following are only some embodiments of the present application, rather than all of the embodiments. Any other embodiments acquired by those skilled in the art based on the embodiments in the present application without any creative efforts fall within the protection scope of the present application.

In order to make the person skilled in the art have a better understanding of solutions of the present application, the present application is described in further detail hereinafter, in conjunction with the drawings and embodiments.

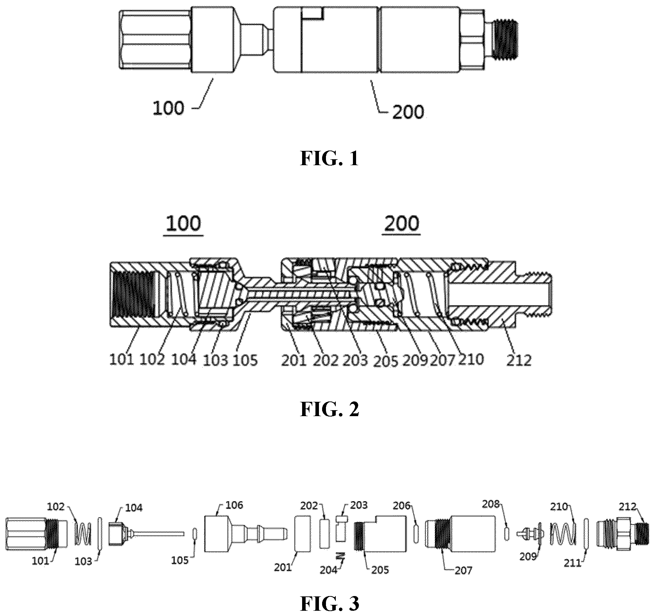

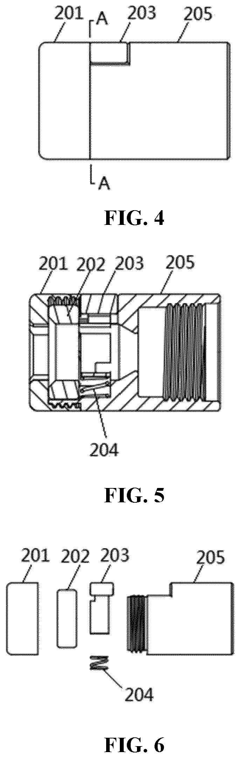

Referring to FIG. 3 to FIG. 6, a socket housing assembly is provided according to an embodiment of the present application, which mainly includes a first socket housing 205, a control block 203, a control block spring 204 and a socket housing cover 201. The first socket housing 205 is of a cylindrical structure, and the socket housing cover 201 is of an annular cap structure. A first end, that is, a left end shown in FIG. 4, of the first socket housing 205, is provided with a threaded connection section, and a second end, that is, a right end, of the socket housing cover 201 is provided with an internal thread for cooperating with the threaded connection section, thereby realizing a screwing connection of the first socket housing 205 and the socket housing cover 201.

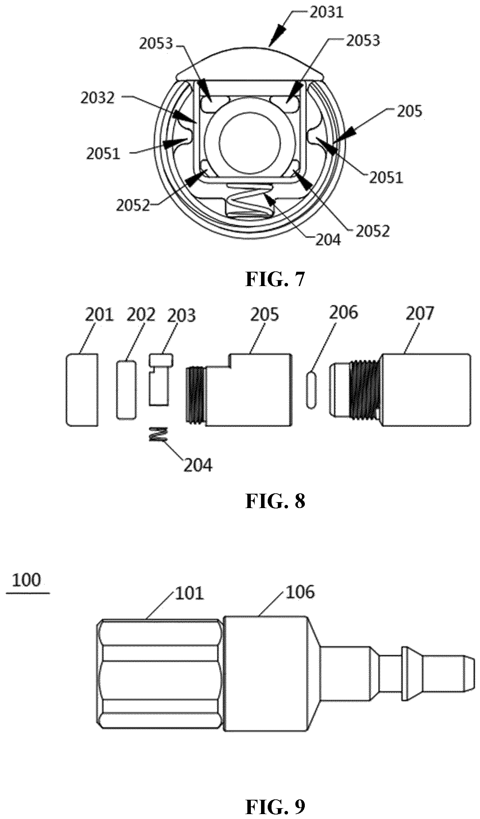

The threaded connection section is provided with a notch portion which extends along an axial direction of the first socket housing 205. After the socket housing cover 201 is opened, the control block spring 204 may be mounted into the first socket housing 205 from a left end face of the first socket housing 205, and the control block 203 may be mounted into the first socket housing 205 from the left end face of the first socket housing 205 along the notch portion. The mounted structure is shown in FIG. 7, in which an elastic pressing portion 2031 of the control block 203 is pressed on the notch portion, an annular limiting portion 2032 of the control block 203 is located in the first socket housing 205, and the control block spring 204 is abutted between the first socket housing 205 and a bottom of the annular limiting portion 2032 to provide an upward elastic force for the control block 203. When the plug assembly 100 is connected, firstly, the elastic pressing portion 2031 is pressed to drive the annular limiting portion 2032 to move down. After the plug assembly 100 is inserted in place, the elastic pressing portion 2031 is released. Under an action of an restoring elastic force of the elastic pressing portion 2031 and the control block spring 204, the annular limiting portion 2032 moves up and locks the plug assembly 100. When the elastic pressing portion 2031 is pressed and released, two wings of the elastic pressing portion 2031 are always attached to the notch portion, which effectively ensures the sealing performance of the product. A split design of the socket housing assembly facilitates opening the socket housing cover 201 and mounting the control block 203 and the control block spring 204 in place, which reduces the difficulty of product assembly and is convenient for inspection and maintenance.

In the above embodiment, referring to FIG. 3 and FIG. 5, a width of the control block 203 is configured to be smaller than a length of the notch portion along the axial direction of the first socket housing 205, so as to ensure that the control block 203 is movable within a certain range. Further, in order to limit the control block 203 and seal the connection between the socket housing cover 201 and the first socket housing 205, the socket housing assembly further includes a limiting gasket 202. A width of the limiting gasket 202 and the control block 203 in the axial direction is slightly smaller than an axial length of the notch portion, that is, the limiting gasket 202 and the control block 203 are in clearance fit between the socket housing cover 201 and the first socket housing 205, so as to ensure the control block 203 to be movable within a certain range. The limiting gasket 202 abuts against the limiting control block 203 in the axial direction to prevent the control block 203 and the control block spring 204 from tilting. Moreover, the limiting gasket 202 can seal the notch portion that is not covered by the elastic pressing portion 2031, which plays a good sealing role on the connection between the socket housing cover 201 and the first socket housing 205, and improves the sealing performance of the product.

The annular limiting portion 2032 of the control block 203 is stamped with stainless steel or galvanized sheet or bent into a U-shape by sheet metal, which is convenient to process and high in efficiency. The elastic pressing portion 2031 is formed by injection molding or compression molding of an elastic material, and the annular limiting portion 2032 is connected with the elastic pressing portion 2031 by injection molding or compression molding. The arrangement of the elastic pressing portion 2031 not only avoids finger injury during pressing, but also keeps a good sealing performance of the product since the two wings of the elastic pressing portion 2031 are always attached to the notch portion. In addition, when the elastic pressing portion 2031 is pressed, the elastic pressing portion 2031 shares a certain pressing force through deformation, and cooperates with the control block spring 204 to provide the elastic force for the annular limiting portion 2032 to reset, thereby prolonging the service life of the control block spring 204.

In an embodiment, with reference to FIG. 7, an inner wall of the first socket housing 205 opposite to the notch portion, that is, a bottom inner wall shown in FIG. 7, is further provided with a positioning groove, and a bottom end of the control block spring 204 is pressed into the positioning groove to prevent the control block spring 204 from tilting. Further, a positioning protrusion may be provided at a bottom end of the annular limiting portion 2032 as required, and the positioning protrusion is configured for positioning a top end of the control block spring 204. For example, the positioning protrusion may be a bump or a protruding post welded at the bottom end of the annular limiting portion 2032.

In an embodiment, with reference to FIG. 5 and FIG. 7, the inner wall of the first end of the first socket housing 205 is further provided with multiple groups of limiting posts, which extend in the axial direction and are arranged at an inner periphery and an outer periphery of the annular limiting portion 2032 respectively, so as to abut and limit the annular limiting portion 2032 and prevent the control block 203 from tilting. In particular, the limiting posts include a pair of first limiting posts 2051, a pair of second limiting posts 2052 and a pair of third limiting posts 2053. The pair of first limiting posts 2051 are respectively arranged on a left side and a right side of the outer periphery of the annular limiting portion 2032. The pair of second limiting posts 2052 are respectively arranged on both sides of the bottom of the inner periphery of the annular limiting portion 2032, and an upper limit position of the annular limiting portion 2032, when the annular limiting portion 2032 is driven upward by the elastic force, is limited by the pair of second limiting posts 2052. The pair of third limiting posts 2053 are respectively arranged on both sides of the top of the inner periphery of the annular limiting portion 2032, and a lower limit position of the control block 203, when it is pressed downward, is limited by the pair of third limiting posts 2053. As can be seen from FIG. 5, the length of the limiting post is generally smaller than the width of the annular limiting portion 2032 in the axial direction.

It is conceivable that the size of the notch portion and the size of the annular limiting portion 2032 (the size in the left-right direction in FIG. 7) can be flexibly adjusted to make the size of the annular limiting portion 2032 be larger than that of the notch portion, so as to prevent the annular limiting portion 2032 from moving upward from the notch portion when no limiting post is arranged.

In another embodiment, with reference to FIG. 8, the socket housing assembly further includes a second socket housing 207. An end, that is, a left end, of the second socket housing 207 is connected with the first socket housing 205 through threads, and a second end, that is, a right end of the second socket housing 207 is configured to connect with a socket base housing 212. In order to ensure the sealing performance of the product, a third sealing ring 206 matched with the plug assembly 100 is further arranged at the inner periphery of the first end of the second socket housing 207.

A fluid connector is further provided according to an embodiment of the present application. With reference to FIG. 1 to FIG. 3, the fluid connector includes a plug assembly 100 and a socket assembly 200, and the socket assembly 200 applies the socket housing assembly provided in the above embodiments.

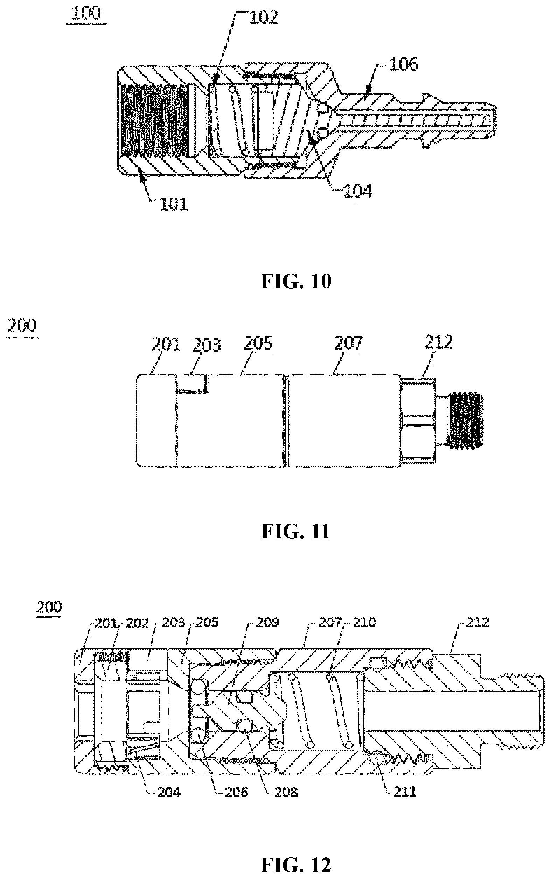

As shown in FIG. 9 and FIG. 10, the plug assembly 100 includes a plug base housing 101, a plug housing 106, a plug spring 102 and a plug sealing rod 104. A cavity for accommodating the plug sealing rod 104 and the plug spring 102 for fluid circulation is formed in the plug base housing 101 and the plug housing 106. The second end, that is, the right end as shown in FIG 3, of the plug housing 106 is provided with a hollow guide post, and an outer periphery of the hollow guide post is provided with an annular locking groove. The plug sealing rod 104 includes a seat body, a rod body and a transition section arranged between them. An outer edge of the seat body is provided with a through hole in the axial direction, and the plug spring 102 is pressed between the seat body and the plug base housing 101. The rod body of the plug sealing rod 104 passes through the hollow guide post, and the transition section seals the hollow guide post under the action of the plug spring 102. When the hollow guide post is inserted into the socket assembly 200, that is, the socket housing assembly, the annular limiting portion 2032 of the control block 203 cooperates with the annular locking groove of the hollow guide post to lock the plug assembly 100 relative to the socket assembly 200, and at the same time, the plug sealing rod 104 is pushed to move towards the plug base housing 101, so that the hollow guide post, that is, a flow passage of the plug assembly 100 is conducted.

As shown in FIG. 11 and FIG. 12, the socket assembly 200 includes a socket base housing 212, a socket spring 210, a sealing block 209 and the socket housing assembly as described in the above embodiment. Taking the socket housing assembly being provided with the second socket housing 207 as an example, the second socket housing 207 connects the first socket housing 205 and the socket base housing 212 to form a flow passage, while the sealing block 209 is press-fitted between the socket base housing 212 and the second socket housing 207 through the socket spring 210, so that the flow passage of the second socket housing 207 is sealed by the sealing block 209. The first end of the sealing block 209 is provided with the rod body. When the plug assembly 100 is plugged with the socket assembly 200, as shown in FIG. 2, the rod body of the sealing block 209 is in contact with the rod body of the plug sealing rod 104, and the sealing block 209 retreats to the socket base housing 212 against the elastic force of the socket spring 210, so that the flow passage of the plug assembly 100 is conducted, thereby realizing the conduction of the fluid connector.

With reference to FIG. 3, FIG. 9 and FIG. 10, the plug assembly 100 further includes a first sealing ring 103 and a second sealing ring 105. The plug base housing 101 is connected with the plug housing 106 by threads, and the first sealing ring 103 is arranged at the connection section of the plug base housing 101 and the plug housing 106, that is arranged between the outer periphery of the plug base housing 101 and the inner periphery of the socket housing, so that the sealing performance of the connection between the outer periphery of the plug base housing 101 and the socket housing is improved. The second sealing ring 105 is mounted outside the transition section of the plug sealing rod 104, and the sealing performance between the plug sealing rod 104 and the inner periphery of the hollow guide post of the plug housing 106 is improved by the second sealing ring 105, thereby improving the sealing performance in a case that the plug assembly 100 is not plugged into the socket assembly 200.

With reference to FIG. 3, FIG. 11 and FIG. 12, the socket assembly 200 further includes a third sealing ring 206, a fourth sealing ring 208 and a fifth sealing ring 211. The third sealing ring 206 is arranged on the inner periphery of the first end of the second socket housing 207 and abuts against the outer periphery of the hollow guiding post of the plug assembly 100 after it is inserted in place. The fourth sealing ring 208 is mounted outside the outer periphery of the sealing block 209 to improve the sealing performance of the sealing block 209 to the flow passage of the second socket housing 207. The fifth sealing ring 211 is arranged between the connecting section of the socket base housing 212 and the second socket housing 207 to improve the sealing performance of the connection and the overall sealing performance of the socket assembly 200.

It should be noted that, terms such as first and second are merely used to distinguish an entity from other entities and do not require or imply that there are any such actual relationships or sequences between these entities herein.

The fluid connector and the socket housing assembly provided according to the present application are described in detail above. To illustrate the principle and implementation of the present application, the specific examples are used herein, but their description above is only given to facilitate understanding of the method and core concept of the present application. It should be noted that several improvements and modifications can be made to the present application by those skilled in the art without departing from the principles of the present application. These improvements and modifications shall fall within the scope of the claims of the present application.

## Claims

1. A socket housing assembly, comprising:
a first socket housing, wherein a first end of the first socket housing is provided with a threaded connection section, and the first socket housing is provided with a notch portion which runs through the threaded connection section and extends in an axial direction;
a control block configured for being mounted into the first socket housing from a first end of the first socket housing along the notch portion, wherein the control block includes an elastic pressing portion and an annular limiting portion, the elastic pressing portion covers an outside of the notch portion and seals the notch portion, and the annular limiting portion is arranged in the first socket housing and is connected with the elastic pressing portion;
a control block spring arranged in the first socket housing and abutting against an inner wall of the first socket housing and an end, away from the notch portion, of the control block ;
a socket housing cover having a first end and a second end, wherein the first end is used for a plug assembly to be inserted into, and the second end has an inner wall provided with an internal thread matching the threaded connection section.

2. The socket housing assembly according to claim 1, wherein a width of the control block is smaller than an axial length of the notch portion, and the socket housing assembly further comprises a limiting gasket, which is arranged between the first socket housing and the socket housing cover and is configured for abutting against the control block in the axial direction.

3. The socket housing assembly according to claim 1, further comprising a second socket housing, wherein a first end of the second socket housing is connected with a second end of the first socket housing, and a second end of the second socket housing is configured for connecting a socket base housing.

4. The socket housing assembly according to claim 1, wherein the annular limiting portion is a sheet metal member or a stamped member, and the elastic pressing portion is connected with the annular limiting portion by injection molding/compression molding.

5. The socket housing assembly according to claim 1, wherein an inner wall of the first socket housing opposite to the notch portion is provided with a positioning groove for positioning the control block spring, and/or a side, abutting against the control block spring, of the annular limiting portion is provided with a positioning protrusion for positioning the control block spring.

6. The socket housing assembly according to any one of claims 1 to 5, further comprising a plurality of groups of limiting posts arranged in the first socket housing and configured for limiting the annular limiting portion.

7. The socket housing assembly according to claim 6, wherein the plurality of groups of limiting posts comprise a pair of first limiting posts respectively arranged on both sides of an outer periphery of the annular limiting portion, a pair of second limiting posts respectively arranged on both sides of a bottom of an inner periphery of the annular limiting portion and a pair of third limiting posts respectively arranged on both sides of a top of the inner periphery of the annular limiting portion;
when the control block is pressed, the third limiting posts define a lower limit position of the control block; and when the control block is released, the second limit posts define a upper limit position of the control block.

8. A fluid connector, comprising a plug assembly and a socket assembly, wherein the plug assembly comprises a plug base housing, a plug housing, a plug spring and a plug sealing rod, which is crimped between the plug base housing and the plug housing through the plug spring;
the socket assembly comprises a socket base housing, a socket spring, a sealing block and the socket housing assembly according to any one of claims 1 to 7, wherein the sealing block is crimped between the socket base housing and the socket housing assembly through the socket spring;
the plug housing is provided with a hollow guide post for inserting into the first socket housing, and an outer periphery of the hollow guide post is provided with an annular locking groove which is locked with the annular limiting portion; when the hollow guide post is inserted into the first socket housing, the plug sealing rod and the sealing block retreat away from each other, and the plug assembly is in communication with the socket assembly.

9. The fluid connector according to claim 8, wherein the plug base housing is connected with the plug housing by threads, a first sealing ring is arranged between the plug base housing and the plug housing, and a second sealing ring is arranged between the plug sealing rod and the plug housing.

10. The fluid connector according to claim 8, wherein when the socket housing assembly is provided with a second socket housing, two ends of the second socket housing are respectively connected with the first socket housing and the socket base housing by threads, and a third sealing ring is arranged between the inner periphery of the first end of the second socket housing and the outer periphery of the second end of the hollow guide post; a fourth sealing ring is arranged between the second socket housing and the sealing block, and a fifth sealing ring is arranged between the second socket housing and the socket base housing.
